(19) Europäisches Patentamt / European Patent Office / Office européen des brevets

(11) **EP 4 607 310 B1**

(12) **EUROPEAN PATENT SPECIFICATION**

(45) Date of publication and mention
of the grant of the patent:
**03.06.2026 Bulletin 2026/23**

(51) International Patent Classification (IPC):
**G05D 1/243** (2024.01)   **G05D 1/248** (2024.01)
**G05D 1/689** (2024.01)

(21) Application number: **24382184.0**

(22) Date of filing: **21.02.2024**

(52) Cooperative Patent Classification (CPC):
**G05D 1/689; G05D 1/243; G05D 1/248;**
G05D 2101/20; G05D 2105/89; G05D 2107/75;
G05D 2109/20; G05D 2111/10

(54) **METHOD, SYSTEM AND UAV FOR DYNAMICALLY CALCULATING A GPS-BASED FLIGHT PLAN FOR INSPECTION OF ELECTRICAL INFRASTRUCTURES**

VERFAHREN, SYSTEM UND UAV ZUR DYNAMISCHEN BERECHNUNG EINES GPS-BASIERTEN FLUGPLANS ZUR INSPEKTION VON ELEKTRISCHEN INFRASTRUKTUREN

PROCÉDÉ, SYSTÈME ET UAV POUR CALCULER DYNAMIQUEMENT UN PLAN DE VOL BASÉ SUR GPS POUR L'INSPECTION D'INFRASTRUCTURES ÉLECTRIQUES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**27.08.2025 Bulletin 2025/35**

(73) Proprietor: **Fuvex Civil, SL**
**31500 Tudela (ES)**

(72) Inventors:
• **ALÁEZ GÓMEZ, Daniel**
**31010 Barañain (ES)**
• **PRIETO MÍGUEZ, Manuel**
**31621 Sarriguren (ES)**
• **VILLADANGOS ALONSO, Jesús**
**31006 Pamplona (ES)**
• **GOIZUETA CRESPO, Ion**
**31500 Tudela (ES)**

• **DE PORCELLINIS PASCAU, Pablo**
**31500 Tudela (ES)**

(74) Representative: **Torner, Juncosa I Associats, SL**
**C / Pau Claris, 108, 1r 1a**
**08009 Barcelona (ES)**

(56) References cited:
**CN-A- 110 081 982      CN-A- 114 442 660**
**US-A1- 2024 053 477**

• **SHI WENDONG ET AL: "Intelligent Infrared Thermometer of Transmission Line UAV Based on Multi-Sensor Cooperative Detection", 2023 INTERNATIONAL CONFERENCE ON ADVANCES IN ELECTRICAL ENGINEERING AND COMPUTER APPLICATIONS (AEECA), IEEE, 18 August 2023 (2023-08-18), pages 604 - 608, XP034601078, DOI: 10.1109/ AEECA59734.2023.00113**

**Description**

## TECHNICAL FIELD

The present invention generally relates to power lines inspection procedures. In particular, the invention relates to a method, a system, and a UAV for dynamically calculating a GPS-based flight plan for inspection of electrical infrastructures. The invention operates without any prior knowledge about the location of electrical infrastructures.

## BACKGROUND OF THE INVENTION

Electrical infrastructures must be inspected regularly (for instance, in Spain, the whole infrastructure should be inspected every three years). Currently, most electrical companies use helicopters to inspect power lines. The helicopter flies along the power line capturing photographs and LiDAR data to be inspected later by experts. The helicopter is a manned aircraft and the pilot controls it to fly along the power line selecting manually the location of the aircraft when capturing data (to take photographs, etc.).

Nowadays, Unmanned Aerial Vehicles (UAVs) such as drones are gaining prevalence for power line inspections due to their capacity for autonomous flight. Flight plans, defined as sets of GPS locations, are programmed into the flight controller before takeoff. This enables the UAV to autonomously follow the specified trajectory, enhancing efficiency and safety. Furthermore, there are scenarios where adjustments to the GPS locations in the flight plan can be made during UAV flight. This operation is coordinated by the UAV pilot stationed at the Ground Control Station (GCS). A new GPS location is communicated from the GCS to the flight controller mid-flight. Importantly, this new GPS position is manually chosen by the personnel overseeing the operation and isn't autonomously evaluated by the flight controller during the ongoing flight.

Documents CN108306217B, CN110888453B, CN116009584A, CN115240093A, CN116202489A, CN110207832A, CN112767391B, CN111006671B, and CN113033508B discloses different strategies for inspecting electrical infrastructures using UAVs. In some of these strategies the flight plan is adjusted by the UAV to avoid obstacles.

CN114442660A discloses a UAV search method using satellite images of a defined area. Surface types are segmented/classified, track-point densities are assigned per type, and GPS track points are randomly generated accordingly. A shortest-path algorithm traverses the track points for cruise search, optionally using contour data to set compensated flight altitudes. Images captured at track points support target detection. However, there is a need for new methods and systems to dynamically calculate a flight plan, without prior knowledge of any location, for inspecting electrical infrastructures using a UAV.

## DESCRIPTION OF THE INVENTION

The present invention proposes, according to a first aspect, a method for dynamically calculating a GPS-based flight plan for a UAV for inspection of electrical infrastructures, without any prior knowledge about the location of electrical infrastructures. The method comprises a) acquiring, by the UAV, images while the UAV is randomly flying; b) detecting/identifying at least one electrical infrastructure in at least one image of the acquired images by analyzing the images using an artificial intelligence algorithm; c) estimating, by the UAV, a GPS location of the detected electrical infrastructure; d) storing, by the UAV, the estimated GPS location in a buffer of estimated GPS locations; e) continuously repeating, during the flight of the UAV towards the at least one detected electrical infrastructure, steps a)-d) until an uncertainty score of an estimated GPS location, denoted as best GPS location, is lower or equal to a given threshold, the uncertainty score being calculated using a distance between the UAV and the estimated GPS location, an angle between an UAV trajectory and a direction between the UAV and the last estimated GPS location, and an average angle between the stored estimated GPS locations; f) denoting the best GPS location as a waypoint for the flight plan; and g) providing the waypoint to the UAV, such that the UAV is guided to the waypoint. The method is repeated for all the electrical infrastructures detected until the UAV is landed.

Embodiments of the present invention also propose, according to a second aspect, a system for dynamically calculating a GPS-based flight plan for a UAV for inspection of electrical infrastructures, without any prior knowledge about the location of electrical infrastructures. The proposed system comprises a UAV including a capturing element (e.g. a low or high resolution camera) and a 3D geopositioning element; a processing element (that can be included in the UAV or in a remote computing device) configured to run an artificial intelligence algorithm; and a buffer of estimated GPS locations. The system of the second aspect is configured to implement the method of the first aspect.

Embodiments of the present invention also provide, according to a third aspect, a UAV for dynamically calculating a GPS-based flight plan for inspection of electrical infrastructures, without any prior knowledge about the location of electrical infrastructures. The UAV comprises a capturing element (e.g. a low or high resolution camera); a processing element configured to run an artificial intelligence algorithm; a 3D geopositioning element; and a buffer of estimated GPS locations.

The UAV is configured to execute the following steps: a) acquire, while the UAV is randomly flying, images using the capturing element; b) detect/identify at least one electrical infrastructure in at least one image of the acquired images by analyzing the acquired images using the artificial intelligence algorithm; c) estimate the GPS location of the detected electrical infrastructure using the 3D geopositioning element; and d) store the estimated GPS location in the buffer, until an uncertainty score of an estimated GPS location, denoted as best GPS location, is lower or equal to a given threshold, the uncertainty score being calculated using a distance between the UAV and the estimated GPS location, an angle between an UAV trajectory and a direction between the UAV and the last estimated GPS location, and an average angle between the stored estimated GPS locations. Additionally, the UAV is configured to be guided to a waypoint of the flight plan, the waypoint being associated to the best GPS location. The UAV is configured to repeatedly perform the previous steps until it is landed.

According to the invention, the detected electrical infrastructure can comprise one or more power line towers, cables, or the like.

In an embodiment, before step g) the invention further comprises verifying, by the UAV, whether the waypoint is reachable based on flight conditions of the UAV.

In an embodiment, the artificial intelligence algorithm comprises a Yolo deep neural network.

In an embodiment, the buffer has a given capacity of N storage positions and implements a First-in-First-out (FIFO) policy.

In an embodiment, a given distance in a horizontal direction and a given distance in a vertical direction with respect to the best GPS location is further added to the waypoint. For example, the distance in the horizontal direction can be between 25 and 35 meters and the distance in the vertical direction can be between 15 and 25 meters.

## BRIEF DESCRIPTION OF THE DRAWINGS

The previous and other advantages and features will be more fully understood from the following detailed description of embodiments, with reference to the attached figures, which must be considered in an illustrative and non-limiting manner, in which:

Fig. 1 is a diagram schematically showing the different steps of the proposed method.
Fig. 2 illustrates how the 3D geopositioning is calculated, according to an embodiment of the present invention.

## DETAILED DESCRIPTION OF THE INVENTION AND OF PREFERRED EMBODIMENTS

The present invention introduces an innovative solution for dynamically calculating, on-demand, the set of waypoints that form the flight plan of a UAV, specifically designed for inspecting electrical infrastructures, for example, power line towers, cables, etc. Unlike traditional approaches, the UAV initiates its mission without predetermined waypoints. Instead, the flight plan is dynamically constructed in real-time during the flight. Remarkably, the UAV doesn't require prior knowledge of the electrical infrastructure locations.

It is important to note that the measurements conducted by the UAV during the flight are inherently imprecise, owing to fluctuating flight conditions, especially variations in wind conditions at each moment. This dynamic and adaptive approach enhances the flexibility and efficiency of the UAV's mission, reacting to the unpredictable nature of real-world flight scenarios.

In some embodiments, the UAV is equipped with a capturing element (e.g. a low or high resolution camera), a 3D geopositioning element, a processing element for executing artificial intelligence (AI) algorithms, and a buffer/memory. It's worth noting that in alternative designs/implementations, the UAV can be planned without integrating the mentioned processing element and/or the buffer. In such cases, the processing element and the buffer could be placed at a remote location, potentially in the cloud, facilitating a decentralized computational approach.

The buffer may have a limited capacity for a maximum of N measures. In this case, when the buffer is full, a new measure would overwrite the oldest measure included in the buffer following a FIFO policy.

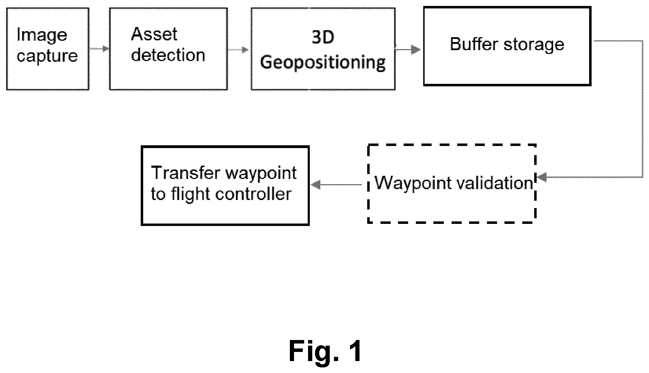

Fig. 1 illustrates an embodiment of the proposed method. In order to dynamically build the flight plan for the UAV, the UAV initially flies in circles, randomly, taking images to identify electrical infrastructures. Images are continuously captured and relayed to the AI processing element. The AI processing element then carries out the task of analyzing the captured images to detect/identify electrical infrastructures therein. Upon a successful detection in an image, the detected electrical infrastructure is 3D geopositioned, signifying that its precise 3D coordinates are determined. The outcome of this geopositioning process is stored in the buffer.

The sequence of actions continues iteratively as the UAV approaches the detected electrical infrastructure, continually accumulating a set of GPS locations within the buffer. The repetition of the above actions persists until the uncertainty of the GPS location of the detected electrical infrastructure is reduced to a level equal to or below a predefined threshold. This optimized GPS location, termed the "best GPS location," denotes the most suitable position for inspecting the electrical infrastructure and is subsequently utilized to define a waypoint for the flight plan.

According to the present invention, the assessment of uncertainty involves calculating a score derived from factors such as 1) the distance between the UAV and the estimated GPS location, 2) the angle between the UAV trajectory and the direction from the UAV to the last estimated GPS location, and 3) the average angle among the stored estimated GPS locations.

The first factor considers the contribution to the uncertainty due to the distance between the whole estimated GPS locations. As the UAV reduces its distance to the electrical infrastructure, the estimated GPS location should produce a lower error measure. The second factor of the uncertainty favors that the trajectory of the UAV (defined at instant t by $\overrightarrow{UAV_{GPS\text{-}t}UAV_{GPS\text{-}(t\text{-}1)}}$) is at time instant t perpendicular to vector defined by UAV position and tower location $\overrightarrow{UAV_{GPS\text{-}t}tw_i}$. The third factor takes into account that estimated GPS location becomes closer and with a tendency to reduce the error in the same direction of the UAV trajectory.

The evaluation of the uncertainty of each estimated electrical infrastructure location ($tw_i$) can be based on the following expression:

$$\text{Uncertainty}(tw_i) = a * \frac{\sum_{q \in B} distance(tw_i, q)}{N} + b * \overrightarrow{UAV_{GPS-t}UAV_{GPS-(t-1)}} \circ \overrightarrow{UAV_{GPS-t}tw_i} + c *$$

$$\sum_{\substack{i=1 \\ j>i \\ q_i, q_j \in B}}^{N} (1 - \overrightarrow{q_i q_{i-1}} \circ \overrightarrow{q_j q_{j-1}})$$

where: $tw_i$ and q are the estimated electrical infrastructure GPS positions; the scalar product between two vectors is denoted by °; a, b and c are design parameters to weight the relevance of each factor, satisfying that their sum is 1 (a+b+c = 1); and *distance(R,S)* is the Euclidean distance between GPS positions R, and S.

In some embodiments, the invention can consider that the current estimated GPS location ($tw_i$) is a good one when its associated uncertainty is lower than a configurable threshold (e.g. 1) during m continuous evaluation steps (e.g. m= 2).

Continuing with the explanation of Fig. 1, upon determining the best GPS location and meeting the uncertainty threshold, the corresponding waypoint is transmitted to the flight controller of the UAV, such that the UAV can be guided/routed to that waypoint.

In some embodiments, the waypoint can be transferred adding a certain distance in the horizontal direction and a certain distance in the vertical direction.

Likewise, in some embodiments, as depicted in Fig. 1, having the waypoint defined/calculated, the invention can (optionally) include a validation step to assess if that waypoint is reachable by the UAV. This validation can be conditional on various factors, such as the prevailing flight conditions of the UAV, including wind conditions, the capability of the UAV's flight envelope to accommodate the intended maneuvering, and/or other relevant parameters. This step ensures that the UAV can feasibly reach and navigate to the designated waypoint within the operational constraints of the aircraft.

The process of Fig. 1 is reiterated for all detected electrical infrastructures until the UAV.

In an embodiment, the electrical infrastructure detection/identification is performed using a Yolo deep neural network. Such network provides the boundary box of the detected asset (target).

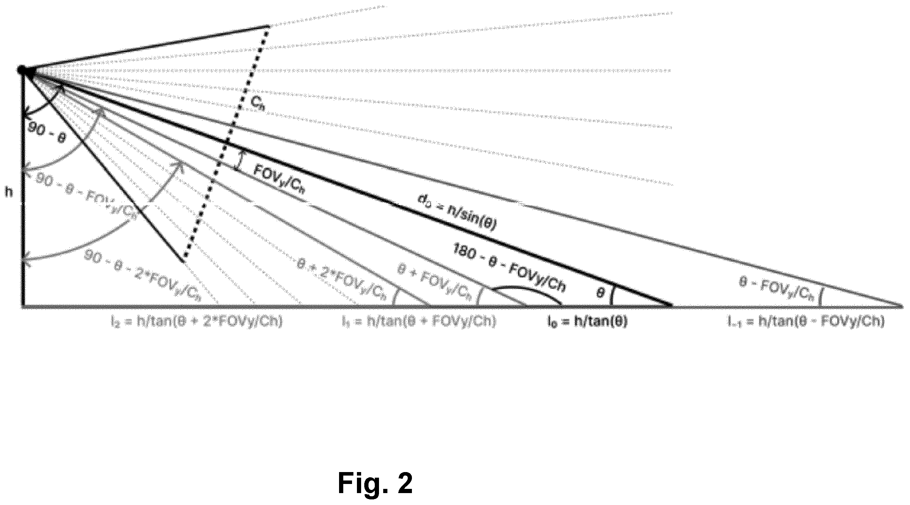

With respect to Fig. 2, an example on how the 3D geopositioning of the detected electrical infrastructure can be calculated is shown. Once the electrical infrastructure has been identified relative to the image capture element center, the distance can be obtained from the UAV height above ground level (AGL) h, the camera pitch angle θ, and the vertical angle between the rays that project to the camera focal center and to the middle bottom of the boundary box.

The distance $l_i$ between the UAV and the electrical infrastructure can be calculated as follows:

$$l_i = \frac{h}{\tan(\theta + i \frac{F_y}{C_h})},$$

with $i \in [-\theta / (F_y/C_h), C_h/2]$.

The camera pitch angle (θ) includes the camera mounting angle and the instantaneous UAV pitch provided by the flight controller. $F_y$ and $C_h$ are the camera's vertical field of view and the height in pixels. The $i$ and $j$ distances from the center of the camera to the bounding fox foot center are given by $i = C_y - C_h/2$, $j = C_x - C_w/2$, where $C_y$, $C_x$ $C_h$ and $C_w$ are camera vertical center, horizontal center, camera height and width respectively. The point coordinates in the camera reference frame (X axis pointing forward to the normal of the camera plane and Y axis pointing right in the camera plane watched over the top) are $P_c = (l_i, l_i \tan \psi_{offset})$. To define the position in a North-East-Down (NED) coordinate system:

$$\begin{pmatrix} y \\ x \end{pmatrix}_{NED} = \begin{pmatrix} \cos \psi_{drone} & \sin \psi_{drone} \\ -\sin \psi_{drone} & \cos \psi_{drone} \end{pmatrix} \begin{pmatrix} y \\ x \end{pmatrix}_{C}$$

The system works by projecting 3D lines in the scene into 2D lines. Low-cost wide-angle lenses typically introduce a strong barrel distortion. For a fast and efficient lens distortion correction, a simple radial algebraic lens distortion model is used:

$$\begin{pmatrix} \hat{x} - x_c \\ \hat{y} - y_c \end{pmatrix} = L(r) \begin{pmatrix} x - x_c \\ y - y_c \end{pmatrix},$$

where $\hat{x}$, $\hat{y}$ are the corrected x and y coordinates and $x_c$, $y_c$ are their respective image center coordinates. The lens distortion parameters are obtained minimizing a 4 total-degree polynomial in several variables:

$$L(r) = k_0 + k_1 r + k_2 r^2 + k_3 r^3 + k_4 r^4, r = \sqrt{(x - x_c)^2 + (y - y_c)^2},$$

The present invention has been described in particular detail with respect to specific possible embodiments. Those of skill in the art will appreciate that the invention may be practiced in other embodiments. For example, the nomenclature used for components, capitalization of component designations and terms, the attributes, data structures, or any other programming or structural aspect is not significant, mandatory, or limiting, and the mechanisms that implement the invention or its features can have various different names, formats, and/or protocols. Further, the system and/or functionality of the invention may be implemented via various combinations of software and hardware, as described, or entirely in software elements. Also, particular divisions of functionality between the various components described herein are merely exemplary, and not mandatory or significant. Consequently, functions performed by a single component may, in other embodiments, be performed by multiple components, and functions performed by multiple components may, in other embodiments, be performed by a single component.

Certain aspects of the present invention include process steps or operations and instructions described herein in an algorithmic and/or algorithmic-like form. It should be noted that the process steps and/or operations and instructions of the present invention can be embodied in software, firmware, and/or hardware, and when embodied in software, can be downloaded to reside on and be operated from different platforms used by real-time network operating systems.

The scope of the present invention is defined in the following set of claims.

## Claims

1. A method for dynamically calculating a GPS-based flight plan for an unmanned aerial vehicle, UAV, for inspection of electrical infrastructures, without any prior knowledge about the location of electrical infrastructures, the method comprising:

   a) acquiring, by a UAV, images while the UAV is flying;
   b) detecting, by a processing element, at least one electrical infrastructure in at least one image of the acquired images by analyzing the acquired images using an artificial intelligence algorithm;
   c) estimating, by the UAV, a GPS location of the detected electrical infrastructure;
   d) storing, by the UAV, the estimated GPS location in a buffer of estimated GPS locations;
   e) continuously repeating, during the flight of the UAV towards the detected electrical infrastructure, steps a)-d) until an uncertainty score of an estimated GPS location, denoted as best GPS location, is lower or equal to a given threshold, the uncertainty score being calculated using:

      a distance between the UAV and the estimated GPS location,
      an angle between an UAV trajectory and a direction between the UAV and the last estimated GPS location, and
      an average angle among vectors joining successive stored estimated GPS locations;

   f) denoting the best GPS location as a waypoint for the flight plan; and
   g) providing the waypoint to the UAV, adding to the waypoint a given distance in a horizontal direction and a given distance in a vertical direction with respect to the best GPS location, such that the UAV is guided to the waypoint;

wherein the method is repeated for all the electrical infrastructures detected until the UAV is landed.

2. The method of claim 1, wherein before step g) the method further comprises verifying, by the UAV, whether the waypoint is reachable based on flight conditions of the UAV.

3. The method of claim 1 or 2, wherein the artificial intelligence algorithm comprises a Yolo deep neural network.

4. The method of any one of the previous claims, wherein the detected electrical infrastructure comprises at least one power line tower or cables.

5. The method of any one of the previous claims, wherein the buffer has a given capacity of N storage positions and implements a First-in-First-out, FIFO, policy.

6. The method of claim 1, wherein the distance in the horizontal direction is between 25 and 35 meters and the distance in the vertical direction is between 15 and 25 meters.

7. A system for dynamically calculating a GPS-based flight plan for an unmanned aerial vehicle, UAV, for inspection of electrical infrastructures, without any prior knowledge about the location of electrical infrastructures, comprising:

   a UAV comprising a capturing element and a 3D geopositioning element;
   a processing element configured to run an artificial intelligence algorithm;
   a buffer of estimated GPS locations;
   wherein the system is configured to:

      a) acquire, by the UAV, images while the UAV is flying;
      b) detect, by the processing element, at least one electrical infrastructure in at least one image of the acquired images by analyzing the acquired images using the artificial intelligence algorithm;
      c) estimate, by the UAV, a GPS location of the detected electrical infrastructure;
      d) store, by the UAV, the estimated GPS location in the buffer of estimated GPS locations;
      e) continuously repeating, during the flight of the UAV, steps a)-d) for said detected electrical infrastructure until an uncertainty score of an estimated GPS location, denoted as best GPS location, is lower or equal to a given threshold, the uncertainty score being calculated using:

         a distance between the UAV and the estimated GPS location,
         an angle between an UAV trajectory and a direction between the UAV and the last estimated GPS location, and
         an average angle among vectors joining successive stored estimated GPS locations;

      f) denote the best GPS location as a waypoint for the flight plan; and
      g) provide the waypoint to the UAV, adding to the waypoint a given distance in a horizontal direction and a given distance in a vertical direction with respect to the best GPS location, such that the UAV is guided to the waypoint;

   wherein the system is configured to repeat the above steps for all the electrical infrastructures detected until the UAV is landed.

8. The system of claim 7, wherein the processing element is included in the UAV.

9. The system of claim 7, wherein the processing element is included in a remote computing device.

10. The system of any of claims 7-9, wherein the detected electrical infrastructure comprises at least one power line tower or cables.

11. An unmanned aerial vehicle, UAV, for dynamically calculating a GPS-based flight plan for inspection of electrical infrastructures, without any prior knowledge about the location of electrical infrastructures, comprising:

   a capturing element;
   a processing element configured to run an artificial intelligence algorithm;

a 3D geopositioning element; and
a buffer of estimated GPS locations;
wherein the UAV is configured to:

- execute the following steps

a) acquire images while the UAV is flying using the capturing element;
b) detect at least one electrical infrastructure in at least one image of the acquired images by analyzing the acquired images using the artificial intelligence algorithm;
c) estimate the GPS location of the detected electrical infrastructure using the 3D geopositioning element; and
d) store the estimated GPS location in the buffer,

until an uncertainty score of an estimated GPS location, denoted as best GPS location, is lower or equal to a given threshold, the uncertainty score being calculated using a distance between the UAV and the estimated GPS location, an angle between an UAV trajectory and a direction between the UAV and the last estimated GPS location, and an average angle among vectors joining successive stored estimated GPS locations; and
- be guided to a waypoint of the flight plan, the waypoint being associated to the best GPS location and having a given distance in a horizontal direction and in a vertical direction with respect to the best GPS location,

the UAV being configured to repeatedly execute the previous steps until it is landed.

12. The UAV of claim 11, wherein before being guided, the UAV further verifies whether the waypoint is reachable based on flight conditions of the UAV.

13. The UAV of any one of claims 11-12, wherein the buffer has a given capacity of N storage positions and implements a First-in-First-out, FIFO, policy.


**Patentansprüche**

1. Verfahren zur dynamischen Berechnung eines GPS-basierten Flugplans für ein unbemanntes Luftfahrzeug, UAV, zur Inspektion von elektrischen Infrastrukturen, ohne jegliche Vorkenntnisse über den Standort der elektrischen Infrastrukturen, wobei das Verfahren Folgendes umfasst:

a) Erfassen von Bildern durch ein UAV während des Fluges des UAV;
b) Erkennen mindestens einer elektrischen Infrastruktur in mindestens einem Bild der erfassten Bilder durch ein Verarbeitungselement, indem die erfassten Bilder unter Verwendung eines Algorithmus der künstlichen Intelligenz analysiert werden;
c) Schätzen eines GPS-Standorts der erkannten elektrischen Infrastruktur durch das UAV;
d) Speichern des geschätzten GPS-Standorts in einem Puffer für geschätzte GPS-Standorte durch das UAV;
e) kontinuierliches Wiederholen der Schritte a)-d) während des Fluges des UAV auf die erkannte elektrische Infrastruktur zu, bis ein Unsicherheitszahlenwert eines geschätzten GPS-Standorts, bezeichnet als bester GPS-Standort, kleiner oder gleich einem gegebenen Schwellenwert ist, wobei der Unsicherheitszahlenwert berechnet wird unter Verwendung:

einer Entfernung zwischen dem UAV und dem geschätzten GPS-Standort,
einem Winkel zwischen einer UAV-Flugbahn und einer Richtung zwischen dem UAV und dem zuletzt geschätzten GPS-Standort und
einem Durchschnittswinkel unter den Vektoren, die aufeinanderfolgende gespeicherte geschätzte GPS-Standorte vereinen;

f) Bezeichnen des besten GPS-Standorts als Wegpunkt für den Flugplan; und
g) Bereitstellen des Wegpunkts für das UAV, wobei dem Wegpunkt eine gegebene Entfernung in horizontaler Richtung und eine gegebene Entfernung in vertikaler Richtung in Bezug auf den besten GPS-Standort hinzugefügt wird, so dass das UAV zu dem Wegpunkt geführt wird;

wobei das Verfahren für alle erkannten elektrischen Infrastrukturen wiederholt wird, bis das UAV gelandet ist.

2. Verfahren nach Anspruch 1, wobei das Verfahren vor Schritt g) ferner das Verifizieren durch das UAV umfasst, ob der Wegpunkt basierend auf den Flugbedingungen des UAV erreichbar ist.

3. Verfahren nach Anspruch 1 oder 2, wobei der Algorithmus für künstliche Intelligenz ein tiefes neuronales Yolo-Netzwerk umfasst.

4. Verfahren nach einem der vorhergehenden Ansprüche, wobei die erkannte elektrische Infrastruktur mindestens einen Stromleitungsmast oder Stromkabel umfasst.

5. Verfahren nach einem der vorhergehenden Ansprüche, wobei der Puffer eine gegebene Kapazität von N Speicherplätzen aufweist und eine First-in-First-out-, FIFO-, Richtlinie implementiert.

6. Verfahren nach Anspruch 1, wobei die Entfernung in horizontaler Richtung zwischen 25 und 35 Metern und die Entfernung in vertikaler Richtung zwischen 15 und 25 Metern beträgt.

7. System zur dynamischen Berechnung eines GPS-basierten Flugplans für ein unbemanntes Luftfahrzeug, UAV, zur Inspektion von elektrischen Infrastrukturen, ohne jegliche Vorkenntnisse über den Standort der elektrischen Infrastrukturen, umfassend:

  ein UAV, umfassend ein Aufnahmelement und ein 3D-Geopositionierungselement;
  ein Verarbeitungselement, das dazu konfiguriert ist, einen Algorithmus der künstlichen Intelligenz auszuführen;
  einen Puffer für geschätzte GPS-Standorte;
  wobei das System zu Folgendem konfiguriert ist:

    a) Erfassen von Bildern durch das UAV während des Fluges;
    b) Erkennen mindestens einer elektrischen Infrastruktur in mindestens einem Bild der erfassten Bilder durch das Verarbeitungselement, indem die erfassten Bilder unter Verwendung des Algorithmus für künstliche Intelligenz analysiert werden;
    c) Schätzen eines GPS-Standorts der erkannten elektrischen Infrastruktur durch das UAV;
    d) Speichern des geschätzten GPS-Standorts im Puffer für geschätzte GPS-Standorte durch das UAV;
    e) kontinuierliches Wiederholen der Schritte a)-d) während des Fluges des UAV für die erkannte elektrische Infrastruktur, bis ein Unsicherheitszahlenwert eines geschätzten GPS-Standorts, bezeichnet als bester GPS-Standort, kleiner oder gleich einem gegebenen Schwellenwert ist, wobei der Unsicherheitszahlenwert berechnet wird unter Verwendung:

      einer Entfernung zwischen dem UAV und dem geschätzten GPS-Standort,
      einem Winkel zwischen einer UAV-Flugbahn und einer Richtung zwischen dem UAV und dem zuletzt geschätzten GPS-Standort und
      einem Durchschnittswinkel unter den Vektoren, die aufeinanderfolgende gespeicherte geschätzte GPS-Standorte vereinen;

    f) Bezeichnen des besten GPS-Standorts als Wegpunkt für den Flugplan; und
    g) Bereitstellen des Wegpunkts für das UAV, wobei dem Wegpunkt eine gegebene Entfernung in horizontaler Richtung und eine gegebene Entfernung in vertikaler Richtung in Bezug auf den besten GPS-Standort hinzugefügt wird, so dass das UAV zu dem Wegpunkt geführt wird;

  wobei das System dazu konfiguriert ist, die obigen Schritte für alle erkannten elektrischen Infrastrukturen zu wiederholen, bis das UAV gelandet ist.

8. System nach Anspruch 7, wobei das Verarbeitungselement in dem UAV enthalten ist.

9. System nach Anspruch 7, wobei das Verarbeitungselement in einer entfernten Recheneinheit enthalten ist.

10. System nach einem der Ansprüche 7-9, wobei die erkannte elektrische Infrastruktur mindestens einen Stromleitungsmast oder Stromkabel umfasst.

11. Unbemanntes Luftfahrzeug, UAV, zur dynamischen Berechnung eines GPS-basierten Flugplans für die Inspektion von elektrischen Infrastrukturen, ohne jegliche Vorkenntnisse über den Standort der elektrischen Infrastrukturen, umfassend:

ein Aufnahmeelement;
ein Verarbeitungselement, das dazu konfiguriert ist, einen Algorithmus der künstlichen Intelligenz auszuführen;
ein 3D-Geopositionierungselement; und
einen Puffer für geschätzte GPS-Standorte;
wobei das UAV zu Folgendem konfiguriert ist:

- Ausführen der folgenden Schritte:

a) Erfassen von Bildern während des Fluges des UAV unter Verwendung des Aufnahmeelements;
b) Erkennen mindestens einer elektrischen Infrastruktur in mindestens einem Bild der erfassten Bilder, indem die erfassten Bilder unter Verwendung des Algorithmus für künstliche Intelligenz analysiert werden;
c) Schätzen des GPS-Standorts der erkannten elektrischen Infrastruktur unter Verwendung des 3D-Geopositionierungselements; und
d) Speichern des geschätzten GPS-Standorts im Puffer,

bis ein Unsicherheitszahlenwert eines geschätzten GPS-Standorts, bezeichnet als bester GPS-Standort, kleiner oder gleich einem gegebenen Schwellenwert ist, wobei der Unsicherheitszahlenwert berechnet wird unter Verwendung einer Entfernung zwischen dem UAV und dem geschätzten GPS-Standort, einem Winkel zwischen einer UAV-Flugbahn und einer Richtung zwischen dem UAV und dem zuletzt geschätzten GPS-Standort und einem Durchschnittswinkel unter den Vektoren, die aufeinanderfolgende gespeicherte geschätzte GPS-Standorte vereinen; und

- Geführt werden zu einem Wegpunkt des Flugplans, wobei der Wegpunkt dem besten GPS-Standort zugeordnet ist und eine gegebene Entfernung in horizontaler Richtung und in vertikaler Richtung in Bezug auf den besten GPS-Standort aufweist, wobei das UAV dazu konfiguriert ist, die vorhergehenden Schritte wiederholt auszuführen, bis es gelandet ist.

12. UAV nach Anspruch 11, wobei das UAV, bevor es geführt wird, ferner verifiziert, ob der Wegpunkt basierend auf den Flugbedingungen des UAV erreichbar ist.

13. UAV nach einem der Ansprüche 11-12, wobei der Puffer eine gegebene Kapazität von N Speicherplätzen aufweist und eine First-in-First-out-, FIFO-, Richtlinie implementiert.

## Revendications

1. Procédé de calcul dynamique d'un plan de vol basé sur GPS pour un véhicule aérien sans pilote, UAV, destiné à l'inspection d'infrastructures électriques, sans aucune connaissance préalable de l'emplacement des infrastructures électriques, le procédé comprenant :

a) l'acquisition, par un UAV, d'images pendant que ledit UAV est en vol ;
b) la détection, par un élément de traitement, d'au moins une infrastructure électrique dans au moins une image des images acquises par analyse desdites images acquises à l'aide d'un algorithme d'intelligence artificielle ;
c) l'estimation, par ledit UAV, d'une position GPS de l'infrastructure électrique détectée ;
d) le stockage, par ledit UAV, de la position GPS estimée dans une mémoire tampon de positions GPS estimées ;
e) la répétition continue, pendant le vol du UAV vers l'infrastructure électrique détectée, des étapes a) à d) jusqu'à ce qu'un score d'incertitude d'une position GPS estimée, désignée comme meilleure position GPS, soit inférieur ou égal à un seuil donné, le score d'incertitude étant calculé en utilisant :

une distance entre ledit UAV et la position GPS estimée,
un angle entre une trajectoire du UAV et une direction entre ledit UAV et la dernière position GPS estimée, et
un angle moyen entre des vecteurs reliant des positions GPS estimées successives stockées ;

f) la désignation de la meilleure position GPS comme point de passage pour le plan de vol ; et
g) la fourniture du point de passage audit UAV, en ajoutant au point de passage une distance donnée dans une direction horizontale et une distance donnée dans une direction verticale par rapport à la meilleure position GPS, de sorte que ledit UAV est guidé vers le point de passage ;

dans lequel le procédé est répété pour toutes les infrastructures électriques détectées jusqu'à ce que le UAV soit posé.

2. Procédé selon la revendication 1, dans lequel, avant l'étape g), le procédé comprend en outre la vérification, par ledit UAV, de la possibilité d'atteindre le point de passage sur la base des conditions de vol du UAV.

3. Procédé selon la revendication 1 ou 2, dans lequel l'algorithme d'intelligence artificielle comprend un réseau neuronal profond Yolo.

4. Procédé selon l'une quelconque des revendications précédentes, dans lequel l'infrastructure électrique détectée comprend au moins un pylône de ligne électrique ou des câbles.

5. Procédé selon l'une quelconque des revendications précédentes, dans lequel la mémoire tampon a une capacité donnée de N positions de stockage et met en œuvre une politique du premier entré, premier sorti, FIFO.

6. Procédé selon la revendication 1, dans lequel la distance dans la direction horizontale est comprise entre 25 et 35 mètres et la distance dans la direction verticale est comprise entre 15 et 25 mètres.

7. Système de calcul dynamique d'un plan de vol basé sur GPS pour un véhicule aérien sans pilote, UAV, destiné à l'inspection d'infrastructures électriques, sans aucune connaissance préalable de l'emplacement des infrastructures électriques, comprenant :

un UAV comprenant un élément de capture et un élément de géopositionnement 3D ;
un élément de traitement configuré pour exécuter un algorithme d'intelligence artificielle ;
une mémoire tampon de positions GPS estimées ;
dans lequel le système est configuré pour :

a) acquérir, par ledit UAV, des images pendant que ledit UAV est en vol ;
b) détecter, par ledit élément de traitement, au moins une infrastructure électrique dans au moins une image des images acquises par analyse desdites images acquises à l'aide de l'algorithme d'intelligence artificielle ;
c) estimer, par ledit UAV, une position GPS de l'infrastructure électrique détectée ;
d) stocker, par ledit UAV, la position GPS estimée dans la mémoire tampon de positions GPS estimées ;
e) répéter en continu, pendant le vol du UAV, les étapes a) à d) pour ladite infrastructure électrique détectée jusqu'à ce qu'un score d'incertitude d'une position GPS estimée, désignée comme meilleure position GPS, soit inférieur ou égal à un seuil donné, le score d'incertitude étant calculé en utilisant :

une distance entre ledit UAV et la position GPS estimée,
un angle entre une trajectoire du UAV et une direction entre ledit UAV et la dernière position GPS estimée, et
un angle moyen entre des vecteurs reliant des positions GPS estimées successives stockées ;

f) désigner la meilleure position GPS comme point de passage pour le plan de vol ; et
g) fournir le point de passage audit UAV, en ajoutant au point de passage une distance donnée dans une direction horizontale et une distance donnée dans une direction verticale par rapport à la meilleure position GPS, de sorte que ledit UAV est guidé vers le point de passage ;

dans lequel le système est configuré pour répéter les étapes ci-dessus pour toutes les infrastructures électriques détectées jusqu'à ce que le UAV soit posé.

8. Système selon la revendication 7, dans lequel l'élément de traitement est inclus dans le UAV.

9. Système selon la revendication 7, dans lequel l'élément de traitement est inclus dans un dispositif de calcul distant.

10. Système selon l'une quelconque des revendications 7 à 9, dans lequel l'infrastructure électrique détectée comprend au moins un pylône de ligne électrique ou des câbles.

11. Véhicule aérien sans pilote, UAV, pour le calcul dynamique d'un plan de vol basé sur GPS destiné à l'inspection d'infrastructures électriques, sans aucune connaissance préalable de l'emplacement des infrastructures électriques, comprenant :

un élément de capture ;
un élément de traitement configuré pour exécuter un algorithme d'intelligence artificielle ;
un élément de géopositionnement 3D ; et
une mémoire tampon de positions GPS estimées ;
dans lequel ledit UAV est configuré pour :

- exécuter les étapes suivantes

a) acquérir des images pendant que le UAV est en vol au moyen de l'élément de capture ;
b) détecter au moins une infrastructure électrique dans au moins une image des images acquises par analyse desdites images acquises à l'aide de l'algorithme d'intelligence artificielle ;
c) estimer la position GPS de l'infrastructure électrique détectée au moyen de l'élément de géopositionnement 3D ; et
d) stocker la position GPS estimée dans la mémoire tampon,

jusqu'à ce qu'un score d'incertitude d'une position GPS estimée, désignée comme meilleure position GPS, soit inférieur ou égal à un seuil donné, le score d'incertitude étant calculé en utilisant une distance entre le UAV et la position GPS estimée, un angle entre une trajectoire du UAV et une direction entre le UAV et la dernière position GPS estimée, et un angle moyen entre des vecteurs reliant des positions GPS estimées successives stockées ; et

- être guidé vers un point de passage du plan de vol, le point de passage étant associé à la meilleure position GPS et présentant une distance donnée dans une direction horizontale et dans une direction verticale par rapport à la meilleure position GPS, ledit UAV étant configuré pour exécuter de manière répétée les étapes précédentes jusqu'à ce qu'il soit posé.

12. UAV selon la revendication 11, dans lequel, avant d'être guidé, ledit UAV vérifie en outre si le point de passage est atteignable sur la base des conditions de vol du UAV.

13. UAV selon l'une quelconque des revendications 11 à 12, dans lequel la mémoire tampon a une capacité donnée de N positions de stockage et met en œuvre une politique du premier entré, premier sorti, FIFO.

Fig. 1

**Fig. 2**

**EP 4 607 310 B1**

**REFERENCES CITED IN THE DESCRIPTION**

**Patent documents cited in the description**

- CN 108306217 B
- CN 110888453 B
- CN 116009584 A
- CN 115240093 A
- CN 116202489 A
- CN 110207832 A
- CN 112767391 B
- CN 111006671 B
- CN 113033508 B
- CN 114442660 A